# FASCICULE DE BREVET EUROPEEN

(11) **EP 1 153 796 B1**
(45) Date de publication et mention de la délivrance du brevet: **21.07.2004**
(21) Numéro de dépôt: 01401210.8
(22) Date de dépôt: 11.05.2001
(51) Int. Cl.: B60R 7/06, B60N 3/00

(54) **Véhicule automobile comportant un module de rangement escamotable**
Kraftfahrzeug mit einklappbarem Ablagemodul
Vehicle with a stowable storage compartment

(30) Priorité: 12.05.2000 FR 0006092
(43) Date de publication de la demande: 14.11.2001
(73) Titulaire: Peugeot Citroen Automobiles SA, 92200 Neuilly sur Seine (FR)
(72) Inventeur: Bertrand Belanger, Pascal, 92310 Sevres (FR)
(74) Mandataire: Jacobson, Claude

(56) Documents cités:
- EP-A- 0 442 355
- DE-A- 4 002 241
- DE-A- 19 854 120
- DE-C- 19 817 302
- DE-U- 6 929 353
- DE-U- 7 914 904
- DE-U- 9 204 491
- US-A- 2 843 301
- US-A- 4 471 848
- PATENT ABSTRACTS OF JAPAN vol. 013, no. 076 (M-800), 21 février 1989 (1989-02-21) & JP 63 275443 A (HITACHI LTD), 14 novembre 1988 (1988-11-14)

## Description

L'invention concerne le domaine des véhicules automobiles et plus particulièrement leur agencement intérieur.

Bien que l'invention s'applique à tout type de véhicules automobiles, elle trouvera une application plus particulièrement intéressante dans les véhicules de type utilitaire.

L'invention vise plus précisément l'agencement à l'intérieur de l'habitacle, de volumes de rangement, et de surfaces d'appui facilitant divers travaux, par exemple d'écriture ou de facturation, pour le conducteur ou un passager. Certains véhicules actuels sont aménagés de façon à permettre le travail d'un ou plusieurs passagers grâce à la disposition de tablettes au dos des sièges conducteur et passager avant par exemple.

Qu'il s'agisse de véhicules utilitaires ou de véhicules de loisir, les volumes de rangement d'accessoires ménagés dans la planche de bord, ainsi que les surfaces d'appui de type tablettes, sont soit hors de portée du conducteur, soit difficiles d'accès. Le problème est évidemment d'autant plus critique dans le cas de véhicules utilitaires, lorsque le conducteur doit lui-même effectuer des tâches de classement de documents, de facturation, ou autres.

Certains constructeurs de véhicules utilitaires ou certains concepteurs spécialisés dans l'aménagement de tels véhicules, ont déjà proposé la solution d'une tablette fixe, disposée comme un accoudoir par rapport au siège conducteur, mais une telle solution d'une part n'offre pas de capacité de rangement très élevée, et d'autre part est difficilement conciliable avec le transport d'un ou plusieurs passagers.

L'invention vise un véhicule automobile conforme au préambule de la revendication 1.

**De tels véhicules sont par exemple décrits dans les documents DE-A-198 17 302 et DE-A-40 02 241.**

Afin de remédier aux inconvénients cités précédemment, un véhicule automobile suivant l'invention **est conforme à la revendication 1.**

Ainsi, l'invention cumule les avantages d'une boîte à gants traditionnelle, c'est-à-dire un espace de rangement relativement important et totalement intégré dans la planche de bord, et les avantages d'une console centrale fixe.

De préférence, le véhicule automobile selon l'invention est conforme à l'une ou plusieurs des revendications dépendantes 2 à 6.

L'invention sera mieux comprise à la lecture de la description qui va suivre, donnée uniquement à titre d'exemple et faite en se référant aux dessins annexés, sur lesquels :
- la Fig.1 est une vue simplifiée en perspective de l'habitacle d'un véhicule automobile suivant l'invention ;
- les Figs.2A et 2B sont des vues simplifiées en perspective d'un module et de son axe de pivotement, le module étant respectivement dans une position fermée et ouverte, suivant la figure 1.

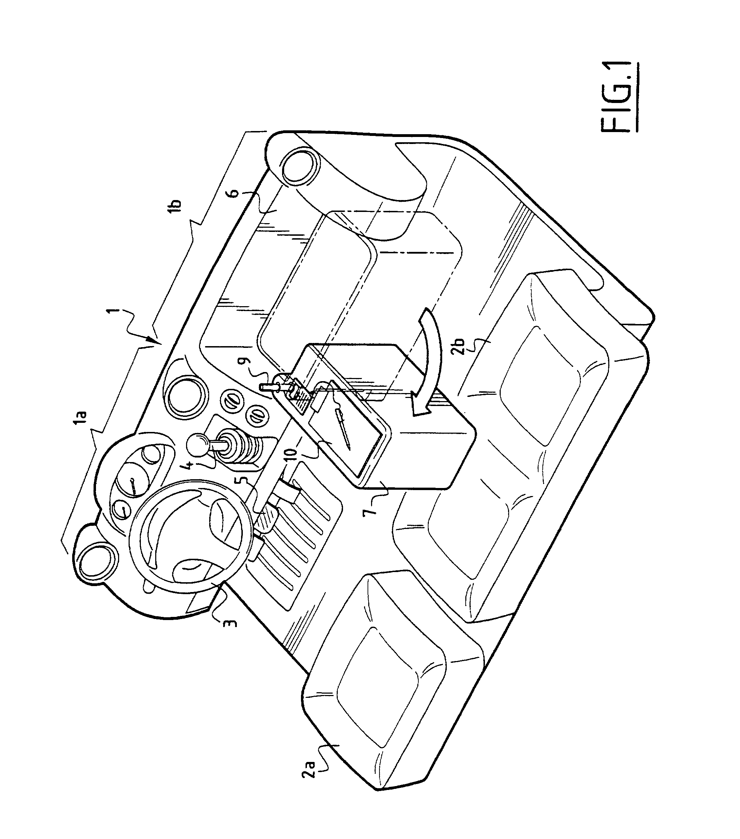

A la figure 1, on a représenté partiellement l'habitacle d'un véhicule automobile comportant une planche de bord 1, présentant une première partie 1a affectée au poste de pilotage et une seconde partie 1b en vis-à-vis d'un siège 2b de passager avant.

La première partie 1a, située en regard du siège avant 2a du conducteur, comporte des organes de commande 3,4,5 du véhicule, comme par exemple un volant 3, un levier de vitesse 4, un pédalier 5.

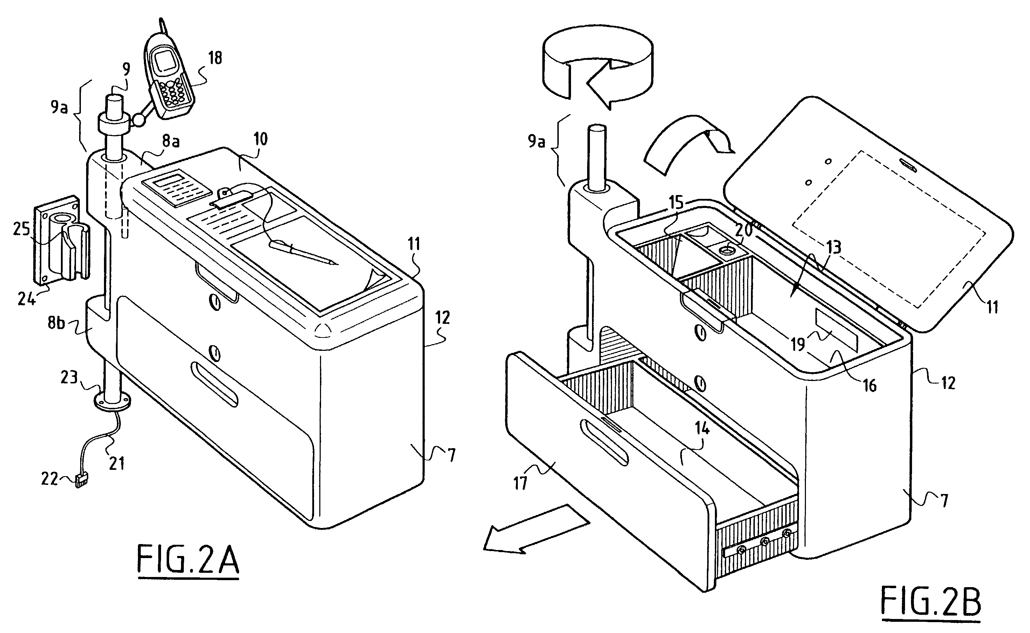

La deuxième partie 1b adjacente à la première, présente un emplacement de rangement 6 adapté pour recevoir un module de rangement 7. Le module 7 est monté pivotant par rapport à la planche de bord 1, au moyen de charnières 8a,8b visibles sur la figure 2A coopérant avec un axe de pivotement 9, entre une position escamotée dans laquelle ledit module 7 se loge au moins partiellement dans l'emplacement de rangement 6 et une position de travail dans laquelle il s'étend sensiblement transversalement par rapport à la planche de bord 1, au voisinage dudit siège avant 2a.

De préférence, l'axe de pivotement 9 est fixé, dans une disposition verticale sur le plancher de l'habitacle en un emplacement proche de la planche de bord 1, par une rondelle de verrouillage 23.

Le module 7 repose par l'intermédiaire de l'une au moins des charnières 8a,8b engagées sur l'axe 9, sur au moins un support 24 qui peut être fixé sur la planche de bord 1.

La position de travail a été représentée à la figure 1 en traits pleins, tandis que la position escamotée a été représenté en traits pointillés.

Le module comprend une face supérieure 10 dont une partie au moins est plane, et constitue une surface d'appui.

Ainsi, le conducteur peut facilement déplacer le module depuis sa position escamotée jusqu'à sa position de travail, pour l'utiliser comme plan de travail en vue de divers types de travaux.

Pour une meilleure compréhension, on a représenté à la figure 2A, un module suivant l'invention sur lequel repose du matériel d'usage courant dans le véhicule utilitaire à usage professionnel.

Comme on le voit sur les figures 2A et 2B, le module 7 comporte un corps creux de forme générale parallélépipédique dont la face supérieure 10 est formée au moins partiellement par un couvercle 11 monté pivotant sur ledit corps 12.

Le couvercle 11 constitue dans ce cas la surface d'appui, et permet d'accéder simplement au volume intérieur 13 du module 7. Le volume intérieur 13 est divisé en plusieurs compartiments 14,15,16, l'un desdits compartiments 14 recevant un tiroir 17, dans une région inférieure du module 7.

L'axe de pivotement 9 du module 7 par rapport à la planche de bord 1 est sensiblement vertical. Il présente une section libre supérieure 9a, susceptible de recevoir de manière superposée à la charnière 8a du module 7, au moins un accessoire 18 articulé sur ledit axe 9. Cet accessoire peut être par exemple un support de téléphone portable 18.

Afin d'améliorer le confort de l'utilisateur, on peut prévoir que le module 7 soit équipé de divers organes, tels une prise d'une alimentation électrique 12V ou 240V, 20 ou encore une lampe 19. On prévoit dans ce but que l'axe de pivotement 9 du module 7 soit un axe creux à l'intérieur duquel passent des câbles 21 d'alimentation électrique des organes 19,20 solidaires du module 7, les câbles 21 étant raccordés à au moins un connecteur 22 de raccordement à l'alimentation électrique générale du véhicule.

Il est bien évident que le module 7, pour assurer un confort d'utilisation optimal aussi bien au conducteur qu'au passager, doit être le plus possible escamotable dans la planche de bord 1, sans pour autant gêner le fonctionnement d'organes de sécurité du type airbag, ces équipements étant de plus en plus largement répandus, y compris dans les véhicules utilitaires.

D'autre part, en position de travail, le module 7 doit pouvoir, s'il n'est pas prévu une largeur suffisante entre les sièges avant et la planche de bord 1, passer, durant son déplacement de sa position escamotée vers sa position de travail, au-dessus de siège avant 2b du passager.

En fonction de la configuration de la planche de bord 1 et de la présence éventuelle d'équipements de sécurité du type airbag, il peut être nécessaire de ménager un espace important dans la planche de bord 1 au-dessus du module 7 dans sa position escamotée.

Dans ce cas, un élément de montage du module tel que l'axe de pivotement 9 du module 7 et/ou un support 24, comporte des rampes 25 destinées à coopérer avec les charnières 8a,8b du module 7, de façon que le module 7 entre sa position escamotée et sa position de travail, décrive une trajectoire hélicoïdale. Les rampes sont orientées de sorte que le mouvement hélicoïdal soit ascendant lorsque le module passe de sa position escamoté à sa position de travail. Ces deux positions sont rendues stables par des moyens d'arrêt classiques qui n'ont pas été représentés.

Grâce à l'invention, on améliore sensiblement les possibilités de travail dans l'habitacle d'un véhicule en élargissant la possibilité de disposer certains accessoires de travail sur supports stables, tout en conservant les capacités de rangement de l'habitacle.

Un avantage est également que le dispositif de rangement est modulaire et peut facilement être adapté à l'usage qui en est fait par le conducteur et les passagers.

En outre, ces améliorations ne se font pas au détriment des possibilités de mouvement du conducteur ou des passagers, ni au détriment du transport des passagers.

On comprendra que l'invention apporte aux conducteurs de véhicules utilitaires de grande largeur notamment, un confort d'utilisation du véhicule appréciable en ce qu'il rend les volumes de rangement beaucoup plus accessibles, et qu'il permet au conducteur de travailler depuis son siège.

## Revendications

1. Véhicule automobile comportant
- une planche de bord (1), ayant une première partie (1a), située en regard d'un siège avant (2a) et comportant des organes de commande (3,4,5) du véhicule, et une deuxième partie (1b) adjacente à la première, et
- un module de rangement (7), la deuxième partie (1 b) de la planche de bord comprenant un emplacement de rangement (6) adapté pour recevoir ledit module de rangement (7), ce dernier étant monté pivotant par rapport à la planche de bord (1) autour d'un axe (9), entre une position escamotée dans laquelle ledit module (7) se loge au moins partiellement dans l'emplacement de rangement (6), et une position de travail dans laquelle il s'étend sensiblement transversalement par rapport à la planche de bord (1), au voisinage dudit siège avant (2a), **caractérisé en ce que** le module (7) comprend un corps creux (12) de forme générale parallélépipédique, dont la face supérieure (10) est formée au moins partiellement par un couvercle (11) monté pivotant sur ledit corps (12).

2. Véhicule automobile suivant la revendication 1, **caractérisé en ce que le module (7) comprend une face supérieure (10) dont une partie au moins est plane, et constitue une surface d'appui.**

3. Véhicule automobile suivant la revendication 1 ou **2**, **caractérisé en ce que** l'axe de pivotement (9) du module (7) par rapport à la planche de bord (1) est sensiblement vertical.

4. Véhicule automobile suivant l'une quelconque des revendications 1 à 3, **caractérisée en ce que** l'axe de pivotement (9) du module (7) présente une section libre (9a), susceptible de recevoir de manière superposée à une partie de charnière (8a) du module (7), au moins un accessoire (18) articulé sur ledit axe (9).

5. Véhicule automobile suivant l'une quelconque des revendications 1 à 4, **caractérisé en ce que** l'axe de pivotement (9) du module (7) est un axe creux à l'intérieur duquel passent des câbles (21) d'alimentation électrique d'organes (19,20) solidaires du module (7).

6. Véhicule automobile suivant l'une quelconque des revendications 1 à **5**, **caractérisé en ce qu'**un élément de montage du module (7), tel que l'axe de pivotement (9) ou un support (24) du module, comporte des rampes destinées à coopérer avec des parties de charnières (8a,8b) du module (7), de façon que le module (7), entre sa position escamotée et sa position de travail, décrive une trajectoire hélicoïdale.

## Patentansprüche

1. Kraftfahrzeug mit:
- einem Instrumentenbrett (1) mit einem ersten Bereich (1a), der gegenüber einem Vordersitz (2a) angeordnet ist und Steuerorgane (3, 4, 5) für das Fahrzeug aufweist, und mit einem zweiten, an den ersten Bereich angrenzenden Bereich (1b), und
- einem Ablagemodul (7), wobei der zweite Bereich (1b) des Instrumentenbrettes eine Ablagestelle (6) aufweist, die dafür eingerichtet ist, das Ablagemodul (7) aufzunehmen, wobei dieses letztere bezüglich des Instrumentenbrettes (1) um eine Achse (9) schwenkbar angeordnet ist zwischen einer eingeklappten Position, in welcher sich das Modul (7) zumindest teilweise in der Ablagestelle (6) anordnet, und einer Arbeitsposition, in welcher es sich praktisch quer zu dem Instrumentenbrett (1) in der Nähe des Vordersitzes (2a) erstreckt, **dadurch gekennzeichnet, dass** das Modul (7) einen Hohlkörper (12) mit allgemeiner Quaderform umfasst, dessen Oberfläche (10) zumindest teilweise von einem Deckel (11 ) gebildet ist, der schwenkbar auf dem Körper (12) angebracht ist.

2. Kraftfahrzeug gemäß Anspruch 1, **dadurch gekennzeichnet, dass** das Modul (7) eine Oberfläche (10) umfasst, die zumindest in einem Teilbereich eben ausgebildet ist und eine Auflagefläche bildet.

3. Kraftfahrzeug gemäß Anspruch 1 oder 2, **dadurch gekennzeichnet, dass** die Schwenkachse (9) des Moduls (7) bezüglich des Instrumentenbrettes (1) praktisch vertikal liegt.

4. Kraftfahrzeug gemäß irgendeinem der Ansprüche 1 bis 3, **dadurch gekennzeichnet, dass** die Schwenkachse (9) des Moduls (7) einen freien Abschnitt (9a) aufweist, der zumindest ein übereinander auf einem Scharnierbereich (8a) des Moduls (7) angeordnetes Zubehör (18) aufnehmen kann, das auf der Achse (9) gelenkig angebracht ist.

5. Kraftfahrzeug gemaß irgendeinem der Ansprüche 1 bis 4, **dadurch gekennzeichnet, dass** die Schwenkachse (9) des Moduls (7) eine Hohlachse ist, in deren Innerern Kabel (21) zur elektrischen Versorgung der einstückig mit dem Modul (7) ausgebildeten Organe (19, 20) verlaufen.

6. Kraftfahrzeug gemäß irgendeinem der Ansprüche 1 bis 5, **dadurch gekennzeichnet, dass** ein Montageelement für das Modul (7), wie die Schwenkachse (9) oder ein Träger (24) für das Modul Rampen aufweist, die dafür bestimmt sind, mit den Scharnierbereichen (8a, 8b) des Moduls (7) derart zusammenzuwirken, dass das Modul (7) zwischen seiner eingeklappten Position und seiner Arbeitsposition einen spiralförmigen Weg beschreibt

## Claims

1. Automobile vehicle having
- a dashboard (1) having a first part (1a) situated opposite a front seat (2a) and having means (3, 4, 5) for controlling the vehicle, and a second part (1b) adjacent to the first, and
- a storage module (7), the second part (1b) of the dashboard comprising a storage space (6) adapted to receive the said storage module (7), the latter being mounted so as to pivot in relation to the dashboard (1) about a spindle (9) between a retracted position in which the said module (7) is accommodated, at least partially, in the storage space (6), and a working position in which it extends substantially transversely in relation to the dashboard (1), in the vicinity of the said front seat (2a), **characterised in that** the module (7) comprises a hollow body (12) which is of parallelepipedal general shape and the upper face (10) of which is formed, at least partially, by a lid (11) which is mounted so as to pivot on the said body (12).

2. Automobile vehicle according to claim 1, **characterised in that** the module (7) comprises an upper face (10), of which at least part is flat and constitutes a support surface.

3. Automobile vehicle according to claim 1 or 2, **characterised in that** the spindle (9) for pivoting the module (7) in relation to the dashboard (1) is substantially vertical.

4. Automobile vehicle according to any of claims 1 to 3, **characterised in that** the spindle (9) for pivoting the module (7) has a free section (9a) which is capable of receiving, in a manner superposed on a hinge part (8a) of the module (7), at least one accessory (18) which is articulated on the said spindle (9).

5. Automobile vehicle according to any of claims 1 to 4, **characterised in that** the spindle (9) for pivoting the module (7) is a hollow spindle, running through the inside of which are electrical supply cables (21) for components (19, 20) integral with the module (7).

6. Automobile vehicle according to any of claims 1 to 5. **characterised in that** an element for mounting the module (7), such as the pivoting spindle (9) or a support (24) for the module, has ramps intended to cooperate with parts of hinges (8, 8a) on the module (7), so that said module (7) follows a helical trajectory between its retracted position and its working position.
